# EUROPEAN PATENT APPLICATION

(11) **EP 4 593 234 A1**
(43) Date of publication of application: **30.07.2025**
(21) Application number: 24153840.4
(22) Date of filing: 25.01.2024
(51) Int. Cl.: H02J 7/00, A63H 33/00, H02J 7/02, H02J 50/90

(54) **RECHARGEABLE ELECTRONIC DEVICE**

(71) Applicant: LEGO A/S, 7190 Billund (DK)
(72) Inventor: GALEOTTI, Micol, Billund (DK)
(74) Representative: Guardian IP Consulting I/S

(57) **Abstract**

An electronic device comprising: a function device for performing at least one user-perceptible, controllable function; a rechargeable power source; and a charging circuit for contactless receipt of electrical energy and for charging the rechargeable power source when the electronic device is positioned in a charging zone of a contactless charging device; wherein the electronic device is adapted to determine a parameter indicative of an available charging rate at a current position and/or orientation of the electronic device relative to the charging device; and to generate a user-perceptible output indicative of the available charging rate.

## Description

### TECHNICAL FIELD

The present invention relates in one aspect to an electronic device comprising a rechargeable power source. In a particular aspect, the electronic device is an interactive toy such as a modular interactive toy element. In a further aspect, the invention relates to a system comprising a charging device and one or more electronic devices, each electronic device comprising a rechargeable power source. In a yet further aspect, the invention relates to a method of controlling the output of an electronic device comprising a rechargeable power source.

### BACKGROUND

Rechargeable electronic devices are used for a variety of applications. One example of electronic devices are interactive toys.

In many situations, e.g. in the context of providing interactive play involving interactive toys, it is desirable to provide a charging process that is intuitive even for untrained users while providing efficient charging of the electronic devices.

Interactive toys allow for an enhanced play experience for a user of the toy, typically by performing a user-perceptible function in response to a user interaction. Modular interactive toy elements may bring such an enhanced play experience to a new level, allowing for combining the modular interactive toy elements with each other to construct a larger variety and complexity of user-perceptible functions performed by such a combination, amongst others. One challenge in this context is supplying electrical power to the interactive toy elements in a manner, which is safe, efficient, user-friendly, reliable and durable, in particular in view of a use by children of all ages, and where the toy has to be easy and intuitive to use, to build, and to play with.

To support freedom and flexibility of interactive play, in particular when using modular interactive toy elements, each of the interactive toy elements may be provided with an autonomous power source, including an electrical energy storage device, such as a rechargeable battery. Furthermore, contactless charging for recharging the electrical energy storage device is a convenient technology in this context, as it is easy to use for the user, and avoids the need for wired connections between a charger and the electronic device to be charged.

Modular interactive toys including a rechargeable energy storage device have previously been disclosed, e.g. International patent application no. PCT/EP2019/084779, which is hereby incorporated by reference. Furthermore, for example, a contactless energy transfer system for transferring electrical power to one or more electronically enhanced toy construction elements or other electronic devices is disclosed in International patent application no. PCT/EP2019/084808, which is hereby incorporated by reference. The same patent application further discloses a wireless inductive charging toy comprising a transmitting induction coil or loop creating an alternating magnetic field, and a toy body, wherein the toy body comprises a rechargeable battery, an electrical load, and an inductive charging circuitry comprising a receiving induction coil for converting the alternating magnetic field into electric current for charging the rechargeable battery.

CN utility model no. 205516505U discloses a toy having a number of separate interactive function modules each comprising a rechargeable battery and an inductive charging circuitry adapted for charging the modules. The toy also comprises a base forming a number of separate transmitting induction coils mutually arranged at a distance from each other so that each module may be placed upon each one of the separate induction coils for charging the module. Accordingly the user needs to carefully position the modules on the respective induction coils.

It is, therefore, desirable to provide an increased flexibility of the charging process while ensuring efficient charging. For example, in the context of toy construction systems, a rechargeable interactive toy may be part of a toy model. In such systems it is cumbersome to disassemble the model in order to properly position the rechargeable interactive toy onto the appropriate charging coil.

WO 2010/059884 A1 discloses an inductively powered toy vehicle and an associated track with inductive charging segment. The vehicle may include a secondary coil, a drive motor, an electrical energy storage device connected between said secondary coil and said drive motor, and a wireless communications unit. The charging segment may include a primary coil operable to transfer electrical power to the secondary coil when the vehicle traverses the charging segment. The vehicle drive motor may be operable at first and second speed settings, and a remote control device can provide operating instructions to the vehicle wireless communications unit. In one embodiment, the speed settings of the vehicle may be controlled automatically instead of interactively, based on a detected signal associated with a portion of a track, for example, an inductively powered track segment. However, the toy vehicle of WO 2010/059884 A1 is typically confined to operation on looped tracks, and it remains desirable to provide a flexible charging solutions for a variety of types of electronic devices.

US 2017/182407 discloses a system and method for recharging a battery in an augmented reality game system. The augmented reality game system includes a mobile device and a remotely controlled drone. The mobile device is programmed to display an augmented reality environment, being the real environment viewed by the camera and a virtual environment superimposed over images of the real environment. The drone is controlled via commands transmitted wirelessly by the mobile device. The mobile device is programmed to execute a video game, which includes activities requiring a player to control the drone in relation to the augmented environment displayed on the mobile smart device video screen. The drone is powered by a rechargeable battery, and the video game includes activities that keep the player occupied with the game whilst the drone's rechargeable battery recharges. However, it is desirable to provide a charging solution that does not require use of a separate mobile device.

Despite previous efforts, it is still desirable to provide charging of electronic devices that is easy-to-use, flexible yet efficient. In particular, it is desirable to provide such charging that can cope with systems of multiple electronic devices. It is further desirable to provide charging that is easy to perform even for untrained users, in particular children of varying ages.

### SUMMARY

One object of the present invention is to overcome at least some of the above-mentioned and/or other disadvantages of the prior art, or at least to provide an alternative to existing solutions.

According to one aspect, disclosed herein are embodiments of an electronic device according to independent claim 1 with advantageous embodiments as defined by the dependent claims and disclosed herein. A particular aspect relates to embodiments where the electronic device is an interactive toy, such as an interactive modular toy element, which may be releasably connected with further modular toy elements to construct models with interactive functionality, or to enhance toy models constructed from conventional modular toy elements with interactive functionality. According to a further aspect, disclosed herein are embodiments of a system including a charging device and one or more electronic devices disclosed herein. Advantageous embodiments of the system are defined by the corresponding further dependent claims and/or are otherwise disclosed herein. According to a further aspect, disclosed herein are embodiments of a method of controlling an electronic device, in particular an interactive toy.

According to some embodiments, the electronic device comprises a housing and, accommodated in said housing:
- a function device for performing one or more user-perceptible, controllable functions;
- a rechargeable power source, in particular for providing operating power to at least the function device; and
- a charging circuit for contactless receipt of electrical energy and for charging the rechargeable power source when the electronic device is positioned in a charging zone of a contactless charging device, in particular a charging device defining a charging zone shaped and sized to accommodate multiple electronic devices at respective user-selectable positions within the charging zone.

The electronic device is adapted to determine at least one parameter indicative of an available charging rate at a current position and/or orientation of the electronic device relative to the charging device; and to generate a user-perceptible output indicative of the determined indicator of the available charging rate.

Accordingly, the electronic devices facilitates appropriate, if not optimal, placement of the electronic device within the charging zone of the charging device, thereby facilitating efficient charging in a user-friendly and flexible manner.

In some embodiments, the electronic device comprises a control circuit for controlling the function device. The rechargeable power source may further be operable to provide operating power to the control circuit. The control circuit may be configured to:
- receive a primary signal indicative of an interaction stimulus;
- obtain a secondary signal indicative of an available charging rate at which the charging circuit can receive electrical energy for charging the rechargeable power source at a current position and/or orientation of the electronic device; and,
- responsive to the primary signal, control the function device to perform a user-perceptible function, wherein the user-perceptible function is configured to provide a user-perceptible output based on the secondary signal, in particular wherein the user-perceptible output is indicative of the available charging rate.

The electronic device comprises a function device, typically an electronic function device. A function device may be any suitable device for performing one or more functions, including at least a function that provides a user-perceptible output, such as a visible, audible, and/or tactile output. The one or more functions may be controlled, typically in response to a control signal applied to the function device, in particular a control signal from the control circuit. Examples of function devices may include any suitable mechanical, electrical and/or optical device, arrangement, and/or circuitry adapted to perform one or more mechanical, electrical and/or optical functions.

Examples of a mechanical function, which some embodiments of a function device can perform, include: driving a rotatable output shaft, winding up a string or a chain, which enables pulling an object closer to an electronic device, moving a hinged part of the electronic device, etc. The mechanical function may thus enable opening or closing a door, ejecting an object, rotating a turntable, moving a linear actuator, etc. Such mechanical motions can be driven by an electric motor.

Examples of a user perceptible electrical and/or optical function, which some embodiments of a function device can perform, include emitting constant or blinking light, activating several lamps in a predetermined sequence, emitting audible sound such as beep, alarm, bell, siren, voice message, music, synthetic sound, natural or imitated sound simulating and/or stimulating play activities, playback of a sound, and/or other audio content, displaying or projecting analogue or digital image information or video information, etc.

Accordingly, the function device may be selected from a motor (e.g. for actuating a rotating or a translating shaft, a vibrator device, or any other kind of mechanical actuator), a light source (e.g. one or more LEDs), an image or video display device, and a sound source (e.g. a loudspeaker). In some embodiments, an electronic device may include more than one function device, e.g. a light source and a sound source, or a light source and a motor, etc. In some embodiments, a system of electronic devices includes multiple electronic devices, e.g. multiple interactive toys. In some embodiments, all electronic devices of the system may include the same type of function device. Additionally or alternatively, different electronic devices of the system may include different types of function devices.

In particular user-perceptible outputs in the form of an indicator light and/or sound have been found particular useful in the context of providing an indication of the available charging rate, as they are intuitive and provide a low-cost, low complexity, low energy consumption solution that does not require a display or other complex electronic device.

The control circuit may be adapted to receive one or more input signals, and in response to the input signals, produce a control signal adapted to control the function device. For example, the control circuit may be an analogue signal processor, digital signal processor, and/or a programmable processor with associated storage and software implementing the required specific functionality of the control circuit according to any of the embodiments herein, or a combination thereof.

The rechargeable power source may be any suitable rechargeable power source. The rechargeable power source may include an electrical energy storage device, such as a rechargeable battery. The rechargeable battery may be a fixed or replaceable rechargeable battery, a capacitor, or other electrical energy storage device.

The charging circuit may be any circuit adapted for contactless receipt of electrical energy, e.g. a circuit comprising a conductive loop or other resonant element configured to be energized by, and harvest energy from, a time-varying electromagnetic field. The conductive loop may include one or more windings, e.g. in the form of one or more electromagnetic coils or otherwise. Furthermore, the charging circuit is for charging the rechargeable power source, e.g. by transferring harvested energy to the rechargeable electrical energy storage of the electronic device.

For the purpose of the present disclosure, the term contactless or wireless is intended to refer to energy transfer from one device to another device without a physical, conductive coupling, i.e. without transfer of electrical energy by means of physical contact via a conductive medium that is conductive for a direct current. It will be appreciated that the term contactless merely characterises the energy transfer and does not exclude that the devices are otherwise physically connected with each other. In particular, two devices may be in physical contact with each other, e.g. mechanically interconnected with each other by means of respective coupling members, while the energy transfer between them is contactless, i.e. does not rely on the physical contact as a carrier for the transfer of energy.

Embodiments of a charging device for contactless energy transfer may comprise a housing and, accommodated within the housing, an energy transfer circuit. The energy transfer circuit may comprise one or more conductive loops for wireless transfer of electromagnetic energy to an electronic device when the electronic device is located in a charging zone defined by the charging device, in particular defined by the one or more conductive loops. Alternatively or additionally, the charging device may comprise one or more energy distribution devices, each configured to provide respective one or more external conductive loops defining a respective charging zone in a proximity off the respective one or more external conductive loops. The charging zones are for charging one or more electronic devices when these are placed inside the charging zone.

A charging zone describes a geometrically defined region where a charging device can provide charging power to compatible rechargeable electronic devices. The presence of a charging zone indicates the availability of charging power within said region, i.e. within the charging zone, at least to at least a minimum degree useful for charging.

In various embodiments, the charging device is configured to provide a charging zone shaped and sized so as to simultaneously accommodate a plurality of electronic devices of a system of electronic devices, e.g. two or more, such as three or more, such as four or more, such as five or more electronic devices. Accordingly, multiple electronic devices may be positioned within the charging zone of the charging device and be charged concurrently.

In various embodiments, the charging device is configured to provide a charging zone shaped and sized so as to allow an electronic device to be moved around the charging zone and be positioned at different locations within the charging zone. In particular, the electronic device may freely be moved around the entire charging zone and preferably be positioned everywhere within the charging zone in an unrestricted manner. For example, the charging zone may define a three-dimensional charging volume such that an electronic device can receive electromagnetic energy from the charging device when the electronic device is positioned within said charging volume. The charging zone may define respective linear extents along three dimensions, which may be referred to as a length, a width and a height, respectively. The linear extents along the three dimensions may be defined as the length, width and height, respectively, of a smallest bounding box accommodating the charging zone.

Similarly, the electronic device may have a length, a width and a height, which may be defined as the length, width and height, respectively, of a smallest bounding box accommodating the housing of the electronic device.

The linear extent of the charging zone in at least one dimension, preferably the linear extents of the charging zone in at least two dimensions and, more preferably, in all three dimensions, may be larger than the smallest linear extent of the electronic device, preferably at least twice as large, more preferably at least five times as large as the smallest linear extent of the electronic device. Further, the linear extent of the charging zone in at least one dimension, preferably the linear extents of the charging zone in at least two dimensions and, more preferably, in all three dimensions, may be larger than the largest linear extent of the electronic device, preferably at least twice as large, more preferably at least five times as large as the largest linear extent of the electronic device.

Accordingly, in some embodiments, an electronic device may be freely moved about the charging zone along one, two or even three dimensions and positioned freely everywhere within the charging zone for charging. When multiple electronic devices are to be charged concurrently, they may be moved around relative to each other within the charging zone and freely be arranged within the charging zone for charging.

In various embodiments, the strength of the charging field generated by the charging circuit of the charging device is non-uniform across the charging zone, i.e. the available charging rate, which may also be referred to as available charging efficiency, at which an electronic device can receive energy may depend on the position of the electronic device within the charging zone. Moreover, the available charging rate may depend on additional or alternative factors, e.g. on the orientation of the electronic device relative to the charging device, in particular on the orientation of a conductive loop of the electronic device relative to a conductive loop of the charging device.

When multiple electronic devices are positioned within the charging zone, the available charging rate of one or more, such as each, of these electronic devices may depend on their respective positions and/or orientations relative to each other. For example, when two devices are positioned close to each other, their charging circuits may interfere with each other and affect their respective charging rates.

In some embodiments, the charging device may define a charging surface, e.g. defined as a surface of a panel or other housing of the charging device on which the electronic device(s) can rest. In some embodiments, the charging surface is a generally flat surface shaped and sized to allow multiple electronic devices to be concurrently and individually positioned on the charging surface next to each other and, preferably spaced apart from each other. The charging surface may define a length and a width of the charging zone. The charging zone may further extend at a height above the charging surface, e.g. as a dome shaped charging zone above the charging surface or otherwise. The charging zone may, in some embodiments, even extend below the charging surface. Accordingly, when the charging device is elevated above another surface, electronic devices may even be positioned on said other surface underneath the charging device for charging.

The secondary signal, which may also be referred to as a charging zone signal, is indicative of a currently available charging rate of the electronic device, i.e. at the current position and/or orientation of the electronic device. In particular, charging may occur when the interactive toy is inside the charging zone. No charging - or at least no sufficiently efficient charging for it to be useful for a given application - can occur when the interactive toy is outside of the charging zone. When the interactive toy is within the charging zone, the available charging rate depends on various factors. Some factors are independent on the position and/or orientation of the electronic device within the charging zone. Such factors include e.g. the current charging state of the rechargeable power source of the electronic device, properties of the charging circuit of the electronic device, etc. However, other factors depend on the position and/or orientation of the electronic device within the charging zone. These factors include the field strength of the charging field generated by the charging device and, hence, on the power delivered by the charging device to the charging circuit of the electronic device, i.e. the power receivable or received by the electronic device from the charging field. Accordingly, the user may influence the available charging rate by varying the position and/or orientation of the electronic device within the charging zone. The user-perceptible output produced by the electronic device indicating the available charging rate at the current position and/or orientation can thus aid the user in finding an appropriate, if not optimal, position and/or orientation for charging. The electronic device may determine a parameter indicative of the currently available charging rate in any suitable way, e.g. based on voltage and/or current signals of the received wireless power and/or on a determination of the currently received power, i.e. the power delivered to the electronic device at the current position and/or orientation of the electronic device relative to the charging device, or otherwise. Accordingly, examples of the secondary signal include a determined voltage and/or electrical current induced at the charging circuit of the electronic device, a determined received power, a determined field strength, or combinations thereof. The secondary signal may be measured or otherwise determined by the charging circuit of the electronic device.

The electronic device may determine the available charging rate before initiating the actual charging of the rechargeable power source of the electronic device and/or during actual charging of the rechargeable power source of the electronic device. Accordingly, the term available charging rate is indicative of the charging rate at which the electronic device is capable of charging the rechargeable power source. One example of a parameter indicative of the available charging rate is the received or receivable power.

Moreover, the electronic device may detect whether it is within or outside the charging zone, e.g. based on the secondary signal, i.e. based on a monitored parameter indicative of the available charging rate or otherwise, e.g. based on the detection of a property of the charging field, based on a detected proximity or position relative to the charging device, and/or otherwise. As above, the parameter indicative of the available charging rate may be or comprise an indication of the currently receivable power. For example, the electronic device may determine that it is within the charging zone when the detected field strength and/or the received power and/or another suitable parameter is above a threshold, such as a predetermined threshold.

The user-perceptible output and/or at least one primary signal is indicative of one or more interaction stimulus. The interaction stimulus may be a user-generated input or otherwise a stimulus caused by the user interacting with the electronic device or with another electronic device. The control circuit is thus configured to be responsive to user input or other user interaction. This facilitates direct involvement of user action in the charging process. The interaction stimulus may be a sensor signal from a sensor of the electronic device, e.g. a motion sensor, a proximity sensor, a magnetic field detection sensor, and/or the like. The interaction stimulus may e.g. be a detected motion of the electronic device, in particular a motion of the electronic device within the charging zone. Alternatively or additionally, the interaction stimulus may be indicative of a detected charging field. Yet alternatively or additionally, the interaction stimulus may be a detected proximity to another electronic device and/or a received communications signal indicative of the presence of another electronic device within the charging zone and/or indicative of an interaction stimulus received by said other electronic device. Further, the interaction stimulus may also be an interaction between the electronic device and a further toy element, e.g. a further electronic device according to any of the embodiments disclosed herein. The user-perceptible function is performed in response to one or more predetermined interaction stimulus, e.g. in response to one or more combinations of interaction stimulus. The at least one primary signal may further include the secondary signal or a signal derived therefrom.

In some embodiments, the user-perceptible function is performed responsive to the electronic device being moved around within the charging zone. Accordingly, the electronic device may be configured to perform the user-perceptible function responsive to the primary signal being indicative of the electronic device being within the charging zone and indicative of the electronic device being moved. To this end, the primary signal may include a motion sensor signal from a motion sensor of the electronic device, and the primary signal may further include a charging zone detection signal indicative of the presence of the electronic device within the charging zone. The charging zone detection signal may e.g. be obtained from a magnetic field detection circuit of the electronic device, a power measurement circuit for measuring a received power at the electronic device, from a proximity detection circuit of the electronic device for detecting proximity to a charging device, from a short-range communications signal received from a charging device, and/or otherwise.

Alternatively or additionally, the user-perceptible function may be performed responsive to another electronic device being moved around within the same charging zone in which the electronic device is located. Accordingly, the electronic device may be configured to perform the user-perceptible function responsive to the primary signal being indicative of the electronic device being within the charging zone and the primary signal being indicative of another electronic device being moved around said charging zone. To this end, the primary signal may include may include a charging zone detection signal indicative of the presence of the electronic device within the charging zone. The primary signal may further include one or more signals indicative of another electronic device being moved within the same charging zone. For example, said other electronic device may detect that it is being moved around the charging zone and communicate that it is being moved around within the charging zone, e.g. via a wireless communications signal, e.g. as a broadcast signal, as a signal communicated via the charging device, or otherwise. Alternatively or additionally, the electronic device may detect the other electronic device using a suitable proximity sensor, position sensor and/or the like. When the electronic device detects another electronic device within its proximity and detects that the relative position of the other electronic device changes, the electronic device may determine that the detected other electronic device is being moved around the same charging zone.

The charging zone detection signal may e.g. be obtained from a magnetic field detection circuit of the electronic device, from a power measurement circuit of the electronic device, from a proximity detection circuit of the electronic device for detecting proximity to a charging device, from a short-range communications signal received from a charging device, and/or otherwise. In some embodiments, the charging device may be configured to communicate a charging zone identification signal, e.g. by embedding a charging zone signature into the charging field, or via a separate wireless communications channel, or otherwise. Accordingly, the electronic device may not only detect that it is located within a charging zone, but it may further detect which charging zone it is located in.

The user-perceptible function may be based on the secondary signal, i.e. based on the currently available charging rate, preferably such that the user-perceptible function provides a user-perceptible output that is indicative of the secondary signal, in particular indicative of the currently available charging rate such that the user can at least approximately compare the relative available charging rates at different positions and/or orientations of the electronic device within the charging zone. The electronic device may select the user-perceptible function in dependence of the secondary signal, e.g. from a set of stored functions. Alternatively or additionally, the electronic device may be configured to modify, alter, or adapt an output function in dependence of the secondary signal. In particular, the electronic device may vary a user-perceptible attribute (e.g. an intensity, magnitude, etc.) of the user-perceptible output in dependence of the available charging rate. The user-perceptible attribute is preferably variable gradually in dependence of the detected available charging rate, e.g. continuously or at least in a plurality of levels, such as three or more levels, such as five or more levels, thereby being indicative of a plurality of degrees or levels of the detected available charging rate as opposed to a mere binary on/off detection.

One advantage of indicating the charging rate when the electronic device is moving about the charging zone, e.g. when hovering over the charging device or when being moved across a charging surface of the charging device, is that it helps a user to find a good charging location/orientation of the electronic device relative to the charging device in an easy and intuitive manner. The charging process thus provides a highly intuitive user experience with a very simple user interface, which may also use existing function devices for user-perceptible output, e. g. by modifying an LED light emission (intensity/color/blinking frequency) and/or varying a sound output (volume/pitch/Geiger-counter sound) according to the charging rate. The user interface can thus be integrated in a surprisingly small form factor - alongside many other interactive functions of the electronic device, and yet give good user feedback that is both intuitive, efficient, and comes with low computational cost. For example, the charging user interface may thus be integrated in an interactive modular toy element of the typical dimensions of a conventional toy construction block.

Advantageously, in some embodiments, the user-perceptible output is only produced subject to a detected interaction, e.g. only when an interaction occurs and/or as long as an interaction stimulus is received, e. g. as long as a user interacts with the interactive toy, and/or for a predetermined time period following the interaction. Accordingly, the power consumption of the electronic device and the complexity of the user interface may be kept low, thereby avoiding unnecessary distraction of the user.

In some embodiments, the user-perceptible output is only produced when the electronic device is operating in an operational charging state, e.g. when charging occurs or is about to occur. For example, the electronic device may change from another operational state into an operational charging state responsive to a charging stimulus, which may be a user input or another suitable trigger. For example, the electronic device may be configured to enter the operational charging state responsive to the detection of a charging field or of a charging field sufficiently strong to allow wireless charging. When operating in the operational charging state, the electronic device may harvest electromagnetic power from the charging field and perform charging of its rechargeable power source. The electronic device may thus be configured to output the user-perceptible output indicative of the current charging rate subject to the electronic device currently operating in its operational charging state and subject to a detected interaction, in particular a detected interaction selected from a set of predetermined trigger interactions. Thereby, it is achieved that the user can easily distinguish the charging operation from an ongoing interactive play or other user interaction. Charging thus becomes an integral yet easy distinguishable part of the interactive play experience.

According to some embodiments, the electronic device further comprises one or more sensor devices, which may operatively be coupled to the control circuit. Thereby a sensor signal can be generated and provided to the control circuit as an input. The control circuit may then be configured to use this input to control an output function, most preferably a user-perceptible function, in response to the sensor signal. Thereby, the interactive functionality of the electronic device is enhanced. Preferably, the one or more sensor devices are accommodated in the housing of the electronic device. An enhanced interactive functionality is thus provided in a self-contained or at least autonomous manner in the electronic device. Thereby, the electronic device facilitates an enhanced intuitive play experience or other user experience by allowing for the intuitive combination of the electronic device with other electronic device, in particular with other interactive toys. A naturally creative play experience may thus be supported. Further, according to some embodiments of the electronic device, at least a first sensor device of the one or more sensor devices is adapted to detect an interaction stimulus, to generate a primary signal indicative of the detected interaction stimulus, and to pass said primary signal as an input to the control circuit. The first sensor device is adapted to detect an interaction stimulus, and to generate a signal indicative of the interaction stimulus. Examples of suitable sensor devices include a motion sensor, a proximity sensor, a position sensor, a magnetic field sensor, etc.

Further, according to some embodiments of the electronic device, the control circuit is configured:
- to determine whether the electronic device is positioned inside the charging zone or outside the charging zone; and to operate the electronic device in an operational charging state responsive to the electronic device being positioned inside the charging zone,
- responsive to the primary signal, and responsive to being in the operational charging state, to control the function device to perform a user-perceptible function indicative of an available charging rate.

Further, according to some embodiments of the electronic device, the interaction stimulus is one or more of:
- a user-generated input to the electronic device;
- a sensor signal, e.g. from motion sensor of the electronic toy or otherwise; and
- an interaction between the electronic device and the charging device and/or between the electronic device and another electronic device, such as another electronic device according to any of the embodiments disclosed herein.

The interaction with another electronic device and/or the charging device may be based on sensor signals, e.g. sensor signals indicative of the proximity to, or even of the position and/or orientation relative to said other electronic device. Alternatively or additionally, the interaction may be based on wireless communication between the electronic devices. For example, the other electronic device may communicate, e.g. broadcast, that it has entered the charging zone and has received an interaction stimulus (e.g. from a motion sensor of the other electronic device or otherwise).

Generating a primary signal from such interaction stimuli may include measuring a physical parameter, such as an optical, electrical, or mechanical parameter, associated with any of the above-mentioned interaction stimuli by means of a sensor arrangement. Furthermore, generating a primary signal may also include identifying, e.g. by means of a unique identifier, or otherwise recognizing the source of the interaction stimulus using a sensor arrangement. Furthermore, multiple of the above-mentioned interaction stimuli may be combined in the generation of the primary signal.

In some embodiments, the electronic device may be configured to output alternative or additional user-perceptible outputs indicative of one or more aspects related to the contactless charging, e.g. one or more of the following:
- A user-perceptible output indicative of the electronic device exiting the operational charging state (and e.g. entering a play state), e.g. responsive to the electronic device detecting that the electronic device is no longer within the charging zone, e.g. responsive to a detected motion of the electronic device and a detected absence of the charging field.
- A user-perceptible output indicative of the current energy storage level, e.g. battery level, of the rechargeable power source of the electronic device. The electronic device may e.g. be configured to output this indication when the electronic device exits the operational charging state (and e.g. entering an operational play state) and/or when the electronic device enters the operational charging state and/or when the electronic device has remained stationary within the charging field for a predetermined period of time.
- One or more error indicators indicative of a malfunction of the charging process.
- A low power-indication indicative of the need for charging the electronic device.
- Etc.

Further, according to some embodiments of the electronic device, the electronic device is an interactive toy, in particular a modular toy element adapted for use in a toy construction system. The toy construction system may comprise a plurality of modular toy elements, wherein the toy housing of the interactive toy comprises coupling members adapted for releasably coupling the interactive toy with modular toy elements of the toy construction system. By providing the housing of the interactive toy with coupling members that are compatible with corresponding coupling members of the modular toy elements of a given toy construction set, the interactive toy becomes an interactive modular toy element, which can be releasably interconnected with the modular toy elements of such a given toy construction set. Using the toy construction set including one or more of such interactive modular toy elements, a toy construction model with interactive functionality can be constructed. As further detailed below, the plurality of modular toy elements of the toy construction system may comprise a plurality of interactive modular toy elements, which may be interconnected to construct a toy construction model combining the interactive functionalities of the individual interactive modular toy elements into a synergistically improved interactive functionality. Alternatively or in addition thereto, the toy construction system may include further, non-interactive modular toy elements, such as passive modular toy elements without any additional functionality beyond the ability to be releasable interconnected by means of coupling members. Adapting the interactive toy for use in a manner compatible with a given toy construction system thus facilitates a flexible, highly creative, and educating play experience.

When the coupling members are detachably interconnectable, the user may deconstruct previously built spatial structures and re-use the electronic devices so as to build new spatial structures. For example, the electronic devices may be connected to each other by traction/friction or by an interlocking connection.

In some embodiments, the electronic device may be provided with a first and a second type of coupling members, such as coupling pegs and peg-receiving recesses for frictionally engaging the pegs, or other pairs of mating or otherwise complementary coupling members configured to engage each other so as to form a physical connection. One type of coupling members may be located on one side, e.g. the top side, of the modular toy element while another, complementary type of coupling members may be located on an opposite side, e.g. the bottom side, of the modular toy element. In some embodiments, the electronic devices include pegs extending from the top face of the electronic device and corresponding peg-receiving cavities extending into the bottom face of the electronic device for frictionally engaging the pegs by a suitable clamping force.

In some embodiments, the housing of an interactive modular toy element and/or of a charging device has a height (excluding the protruding coupling members) of between 3 mm and 10 mm, such as between 3.2 mm and 9.6 mm, such as 3.2 mm or 6.4 mm or 9.6 mm. The length and width of the housing of the interactive modular toy element may each be between 5 mm and 35 mm, such as between 8 mm and 32 mm, such as 8 mm, 16 mm, 24 mm or 32 mm. For example, the lateral dimensions may be 16 mm × 16 mm or 16 mm × 24 mm or 16 mm × 32 mm. It will be appreciated, however, that other dimensions may be selected.

A further aspect of the invention relates to an interactive toy system including one or more interactive toys according to any of the embodiments as disclosed herein. The system facilitates in an analogous manner efficient yet flexible charging in a user-friendly and intuitive manner. The system thus achieves at least the analogue advantages as discussed elsewhere herein and in particular with respect to embodiments of the electronic device.

According to one aspect, a system, in particular an interactive toy system comprises:
- a charging device defining one or more charging zones; and
- one or more electronic devices, in particular one or more interactive toys, according to any one of the embodiments disclosed herein.

Embodiments of the system may comprise different types of electronic devices with respective function devices.

According to some embodiments, the system comprises at least two electronic devices, such as at least two interactive toys, wherein a first one of the electronic devices is configured to receive an interaction stimulus generated by a second one of the electronic devices, and to generate the user-perceptible output, which is indicative of the secondary signal, responsive to said interaction stimulus received from the second one of the electronic devices. The user-perceptible output of the first electronic device may thus be triggered by an input from, or by another interaction with, the second electronic device and depend on the currently available charging rate of the first one of the electronic devices. Thereby an enhanced charging process may be achieved when concurrently charging multiple electronic devices.

Further, according to some embodiments of the system, the interaction stimulus generated by the second one of the electronic devices further depends on the second electronic device being in its operational charging state, and on the second electronic device receiving an interaction stimulus, e.g. by a motion sensor of the second electronic device.

Further, according to some embodiments of the system, the interaction between first and second ones of the electronic devices further depends on the first and second ones of the electronic devices being in the same charging zone. For example, a stimulus provided to a first electronic device by a second electronic device may depend on whether the second electronic device is in a charging zone (and in an operational charging state), and whether the second electronic device is in the same charging zone as the first electronic device.

Advantageously according to some embodiments of the system, the second one of the electronic devices may generate a user-perceptible function determined in accordance with a secondary signal obtained by the second one of the electronic devices. The secondary signal obtained by the second one of the electronic devices is indicative of the currently available charging rate of the second electronic device.

For example, when the first electronic device is positioned at a position in the charging zone, e.g. at a stationary position within the charging zone, the available charging rate at which the first electronic device can receive power from the charging device may depend on the presence of another, second, electronic device in the charging zone. Accordingly, when a second electronic device is moved into the charging zone, it is advantageous when not only the newly added second electronic device outputs a user-perceptible output indicative of the available charging rate of the second electronic device, but when also the (possibly stationary) first electronic device outputs a user-perceptible output indicative of the available charging rate of the first electronic device. Accordingly, at least as long as the user moves about one of the first and second electronic devices, both the first and second electronic devices may output user-perceptible outputs indicative of their respective available charging rates, thereby allowing the user to find a good overall spatial configuration of the electronic devices within the charging zone.

A yet further aspect of the invention relates to a method of controlling an electronic device, in particular an interactive toy, the electronic device comprising a housing and, accommodated in said housing:
- a function device for performing one or more user-perceptible, controllable functions;
- a control circuit for controlling the function device;
- a rechargeable power source for providing operating power to the function device and the control circuit; and
- a charging circuit for contactless receipt of electrical energy and for charging the rechargeable power source when the electronic device is positioned in a charging zone of a contactless charging device;
the method comprising the steps of:
- detecting a primary signal indicative of an interaction stimulus;
- detecting a secondary signal indicative of a current charging rate;
- selecting a user-perceptible function based on the secondary signal; and,
- responsive to the primary signal, controlling the function device to perform the selected user-perceptible function.

Furthermore, the skilled person may directly define further advantageous embodiments of the method of controlling the electronic device and the system, by way of analogy, based on the advantageous features as disclosed and discussed herein with respect to any one of the embodiments of an electronic device and/or of an interactive toy system and their operation, whereby at least the corresponding advantages are achieved.

### BRIEF DESCRIPTION OF THE DRAWINGS

Embodiments of the invention will now be described in more detail, mainly with reference to interactive toys. However, it will be appreciated that the various aspects disclosed herein may also be applied to other types of electronic devices, in particular interactive electronic devices that can generate user-perceptible outputs and that can be charged in a contactless manner. Various embodiments will be described in connection with the appended drawings, in which:
- FIG. 1: schematically shows an interactive toy system according to one embodiment.
- FIG. 2: shows an exploded view of an example of an electronic device in the form of a modular toy element.
- FIG. 3: schematically illustrates a charging device for contactless charging of electronic devices in accordance with various embodiments disclosed herein.
- FIG. 4: illustrates the charging device of FIG. 3 with a toy construction model placed on top of the charging surface of the charging device.
- FIG. 5: illustrates the charging device of FIG. 3 with an electronic device in the form of an interactive modular toy element being moved by the user into the charging zone of the charging device for charging.
- FIG. 6: illustrates the charging device of FIG. 3 with an electronic device being moved around by the user within the charging zone of the charging device.
- FIG. 7: illustrates the charging device of FIG. 3 with an electronic device positioned stationary inside the charging zone of the charging device.
- FIG. 8: illustrates the charging device of FIG. 3 with an electronic device being moved by a user into the charging zone of the charging device for charging, while two other electronic devices are already present within the charging zone.
- FIG. 9: illustrates the charging device of FIG. 3 with an electronic device being moved around by a user within the charging zone of the charging device for charging, while two other electronic devices are stationary within the charging zone.

### DETAILED DESCRIPTION

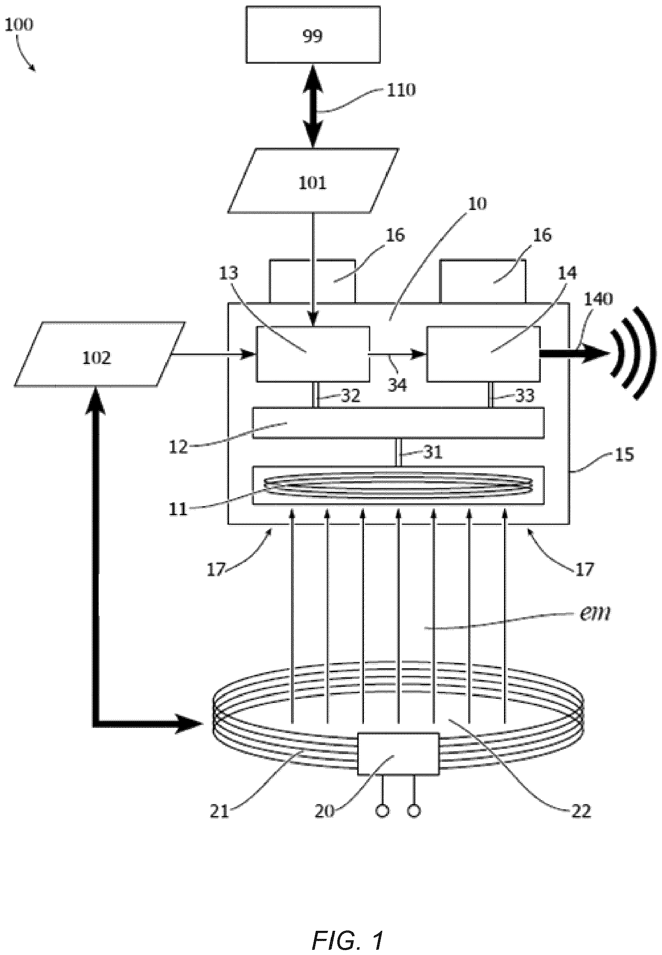

Fig. 1 shows a schematic of an interactive toy system 100 according to one embodiment. The interactive toy system 100 comprises an interactive toy 10 and a charging device 20 with a transmitting coil 21, in the form of conductive loops, defining a charging zone 22. The interactive toy 10 comprises a toy housing 15 and, accommodated in said toy housing 15, a function device 14 for performing one or more user-perceptible, controllable functions 140; a control circuit 13 for controlling the function device 14; a rechargeable power source 12 for providing operating power 32, 33 to the function device 14 and the control circuit 13; and a charging circuit 11 for contactless receipt of electrical energy e-m and for charging (as indicated by reference numeral 31) the rechargeable power source 12 when the interactive toy 10 is positioned in the charging zone 22 of the contactless charging device 20. The interactive toy 10 may be adapted to determine an available charging rate as the charging zone signal, i.e. the secondary signal 102. The secondary signal 102 may be indicative of the available charging rate at a current position of the interactive toy 10 relative to the charging zone 22 and/or at the current orientation of the interactive toy 10 relative to the charging zone 22. A corresponding user-perceptible output 140 may be selected or otherwise controlled by the control circuit according to that secondary signal 102, wherein the user-perceptible output 140 is indicative of the currently available charging rate. The control circuit is configured to receive a primary signal 101 indicative of an interaction stimulus 110 from a stimulus source 99; to receive the secondary signal 102 indicative of the currently available charging rate of the interactive toy; and, responsive to the primary signal 101, to produce a control signal 34 based on the secondary signal 102. The control signal is for controlling the function device 14 to perform a user-perceptible function 140, wherein the user-perceptible function 140 is selected or otherwise controlled based on the secondary signal 102.

As mentioned, according to some embodiments, the primary and/or secondary signals 101, 102 may be generated using sensor devices and/or communication devices, which may be arranged inside or on the toy housing 15. Furthermore, an interaction stimulus may also at least partly be inferred from the secondary signal and a corresponding primary signal 110 indicative of the interaction stimulus may be generated. By way of example, an interaction stimulus may be inferred from one or more of: a change in a charging rate, a charging rate passing above or below a threshold, a change in electric or magnetic field strength, or such a field strength passing above or below a threshold. The available charging rate, or an electric or magnetic or field strength may be determined in the charging circuit 11 and/or by one or more dedicated sensors. A trigger generation based on the primary signal may be performed internally, for example in the control circuit, and/or externally, for example in another interactive toy, or even in an external data processing device in communication with the interactive toy. Alternatively or in addition thereto, the primary and/or secondary signals 101, 102 may also be generated by devices that are located elsewhere, and transmitted to the interactive toy 10. The primary signal 101 indicative of an interaction stimulus 110 may also be an analogue and/or digitally encoded control signal received from a another interactive toy as the interaction source 99, e.g. via infrared (IR) or radiofrequency (RF) communication.

The housing 15 of interactive toy 10 further comprises coupling members 16, 17. The interactive toy 10 may thus be used as a modular toy element adapted to be releasably interconnected with further modular toy elements (not shown here). As mentioned above, this is useful for the use of the interactive toy 10 in constructing toy construction models and/or for the construction of toy construction models with advanced interactive functionality by including a plurality of modular interactive toy elements 10 in such a toy construction model.

During operation of the interactive toy system 100, the interactive toy 10 may be controlled to detect a primary signal 101 indicative of an interaction stimulus 110; to detect a secondary signal 102 indicative of a currently available charging rate of the interactive toy 10; to select a user-perceptible function 140 based on the secondary signal 102; and, responsive to the primary signal 101, to control the function device 14 to perform the selected user-perceptible function 140.

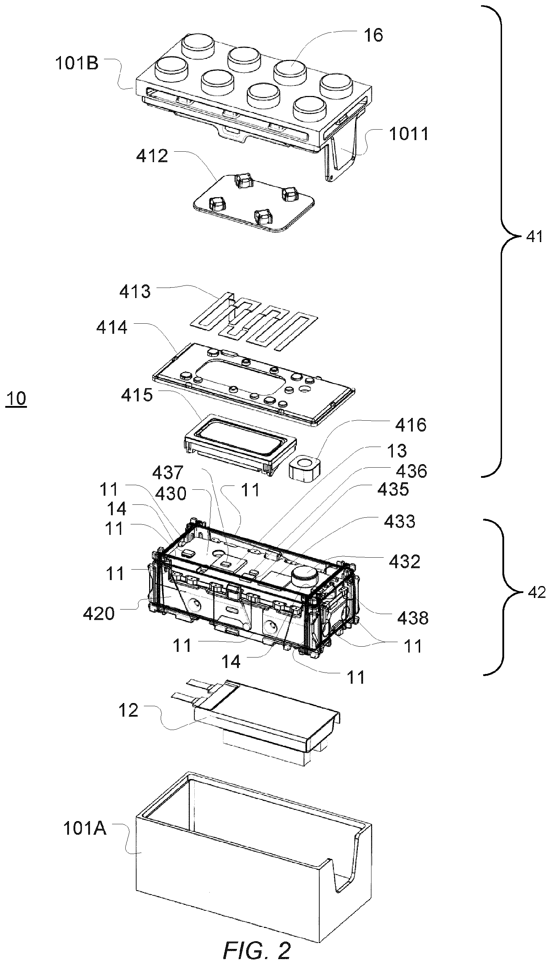

FIG. 2 shows an exploded view of an example of an electronic device in the form of a modular toy element, generally designated 10. The modular toy element 10 is similar to the interactive toy of the embodiment of FIG. 1 in that it comprises a housing, a control unit 13 and one or more conductive loops 11, a rechargeable battery 12 (or other rechargeable power source), and one or more function devices, all accommodated within the housing. As will be described below, the modular toy element 10 further comprises one or more sensors and a wireless communications interface 211.

In the example of FIG. 2, the housing of the modular toy element 10 comprises an upwardly open bottom housing member 101A and a lid member 101B. The lid member 101B is configured to be connected to the bottom housing member 101A and, when connected, to close the opening of the bottom housing member, such that the bottom housing member and the lid member together form a housing accommodating the remaining components of the modular toy element. The lid member may be fastened to the bottom housing member in any suitable manner, e.g. by a snap fit connection, by welding, gluing or otherwise.

In some embodiments, the bottom housing member 101A and the lid member 101B are made from plastics material, e.g. thermoplastic polymers, or from another suitable material. The housing may e.g. be made by an injection molding process or by another suitable manufacturing process. In the present example, the lid member is made from a transparent material.

The housing is box-shaped and comprises coupling members as described in connection with FIG. 1. In particular, the top face of the lid member includes coupling pegs 16 and the bottom face of the bottom housing member comprises corresponding cavities (not shown in FIG. 2).

The modular toy element 10 includes a rechargeable battery 12 (or other rechargeable power source) accommodated in the bottom housing member 101A.

The modular toy element 10 includes a support frame 420, a printed circuit board (PCB) 430 and a number of electromagnetic coils 11 forming one or more conductive loops. In the example of FIG. 2, the electromagnetic coils are arranged as three pairs of electromagnetic coils. The PCB 430 is attached to the support frame 420 and the coils are wound around the frame 420 such that the support frame, the coils and the PCB form a core assembly 42 accommodated inside the bottom housing member 101A.

The modular toy element 10 further comprises an antenna 413 and a loudspeaker 415, both mounted to the lid member 101B so as to form a top assembly 41. The top assembly 41 further comprises a coloured insert 412 sandwiched between the lid member 101B and the antenna 413. The top assembly 41 further comprises an opaque insert 414 sandwiched between the antenna 413 and the loudspeaker 415. The inserts 412 and 414 provide vents to facilitate high-frequency sound from the loudspeaker to pass, while obscuring the antenna and the other electronics components from view through the transparent lid member 101B.

The PCB 430 is electrically connected to the antenna 413, the loudspeaker 415, the rechargeable battery 12, and to the coils 11 of the three coil pairs. The PCB 430 further comprises a number of electronic components. In particular, the PCB comprises a control unit 13, LEDs 14, a side-firing LED 438, a microphone 432, a coil interface circuit 433, a memory 435, an accelerometer 436 and a wireless communications circuit 437. The top assembly further comprises an acoustic seal 416 positioned on top of the microphone 432.

The control unit 13 may be implemented as a single integrated circuit or as a combination of multiple components, e.g. as an ASIC and a microprocessor, or otherwise. The control unit 13 is coupled to the coils 11 of the three coil pairs via the coil interface circuit 433. The coil interface circuit 433 may be implemented as a single unit or as multiple components. At least part of the coil interface circuit may be implemented by an ASIC, e.g. an ASIC that also implements a part of the control unit 13. The control unit 13 is further coupled to the remaining electronic components and implements suitable drivers and/or other control functionality for operating the respective electronic components. The wireless communications circuit 437 is coupled to the antenna 413 and to the control unit 13 for implementing a suitable wireless communications protocol, such as based on Bluetooth Low Energy (BLE) or otherwise. The communications circuit 437, or at least a part thereof, may be integrated with the control unit 13 as schematically illustrated in FIG. 2.

The LEDs 14 are arranged at respective opposite ends of the PCB such that the light from the LEDs is visible through the transparent lid member 101B. When the modular toy module is in its operational charging state, the LEDs 14 may be used to provide a visual output indicative of the available charging rate as described herein. The side-firing LED 438 is arranged at one end of the PCB such that the light from the side-firing LED is output through a side portion 1011 of the transparent lid member 101B.

The electromagnetic coils 11 are arranged as three pairs of respective coils such that the coils of each pair are arranged coaxially with each other and orthogonal to the coils of the other pairs. The coils of each coil pair are arranged spaced apart from each other, proximal to respective opposite sides of the box-shaped housing. The coils of each coil pair are electrically connected in series with each other, in particular such that they are cumulatively coupled. One or more of the coils 11 may be used for wireless charging of the rechargeable battery, e.g. as described in WO 2020/156721 or otherwise. Additionally, one or more of the coils may be used for other magnetic operations, such as for reading wireless tags - e.g. as described in WO 2020/156720 or otherwise - and/or for position and/or orientation sensing of positions and/or orientations of other modular toy elements of the system - e.g. as described in WO 2020/156719 or otherwise.

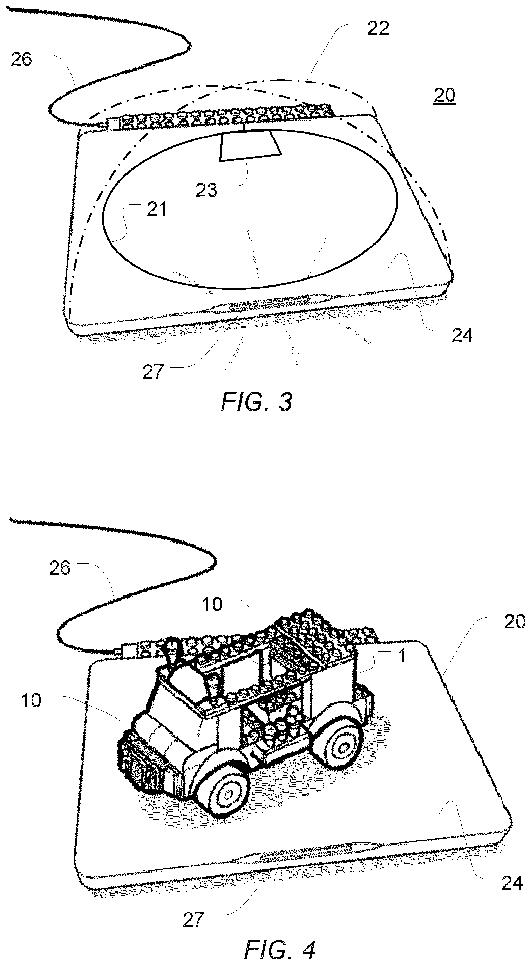

FIG. 3 schematically illustrates a charging device for contactless charging of electronic devices in accordance with various embodiments disclosed herein. The charging device, generally designated by reference numeral 20, is similar to the charging device of the embodiment of FIG. 1. It comprises at least one conductive loop 21, which in this embodiment is embedded in a flat panel-shaped housing that defines a charging surface 24 on which the electronic devices can be placed for charging. While schematically shown as a single oval loop in FIG. 3 for ease of illustration, it will be appreciated that the conductive loop may have a different shape and/or size and/or the charging device may comprise more than one loops, e.g. one or more electromagnetic coils etc.

The charging device 20 further comprises a charging control circuit 23, which is operable to energize the conductive loop 21 so as to generate an electromagnetic charging field for contactless charging of electronic devices. To this end, the charging device may be connectable via a cable 26, or otherwise, to a suitable supply of electrical energy for providing power to the charging circuit. The charging device 20 may include one or more additional components, e.g. a wireless communications interface for communicating with the electronic devices being charged and/or with other external devices. The wireless communication may utilize any suitable communications technology, such as Bluetooth, Wifi, etc. The charging device 20 may further comprise a suitable user interface 27, e.g. one or more LEDs, for providing feedback to the user about the operational state of the charging device and/or other information pertaining to the charging process.

While schematically illustrated in FIG. 3, it will be appreciated that, in most embodiments, the conductive loop 21 and the charging control circuit 23 will not be visible to the user during normal operation of the charging device, as they may be incorporated in an internal cavity of the housing of the charging device or otherwise be obstructed from view.

During operation, the control circuit 23 energizes the conductive loop 21 so as to generate a charging field at and above the charging surface 24. The charging field defines a charging zone 22 within which electronic devices may receive sufficient power to perform contactless charging of their respective rechargeable power sources. Preferably, the charging zone extends across at least a major part of the charging surface 24, preferably across the entire charging surface 24 or even to an area outside the charging surface 24. Moreover, it is preferred that the charging zone extends to a suitable height above the charging surface 24, as is schematically indicated by dashed dotted lines 22 in FIG. 2. Accordingly, electronic devices may be positioned at a certain height above the surface 24 and still be able to contactless receive power from the charging device. Even though not explicitly shown in FIG. 3, it will be appreciated that the charging zone may also extend below the charging surface 24. It will further be appreciated that the extent of the charging zone 22 will typically not be visible to the user. Moreover, the boundary of the charging zone may depend on the properties of the electronic devices to be charged, i.e. some devices may be capable of receiving sufficient power from the charging field at larger distances from the charging device than other electronic devices.

Generally, the charging zone of various embodiments of the charging device is three-dimensional and extends beyond the surface 24 of the charging device. The charging field may be strongest at the center of the charging surface 24 and directly at said surface. The charging field may progressively degrade the further away an electronic device being charged is located from that position. Nevertheless, despite the gradual decrease of the charging field, a delimited charging zone may be defined. To this end, the charging zone may be defined as a zone where the strength of the charging field is above a predetermined threshold and/or as a zone within which complete charging of the electronic devices of a system can be performed within a predetermined period of time. The extent of the charging zone may be the same for all electronic devices of the system or it may be slightly device-dependent. The threshold may be determined as a threshold defining a limit where the charging field is too weak to allow the electronic device to be fully charged within a useful time frame. The time frame may depend on the application. In one embodiment, the threshold is set such that complete charging anywhere within the charging zone is possible within e.g. 10 h and would at least take more than 10 h outside the charging zone. It will be appreciated that another limit may be set depending on the desired user experience.

The dimensions of the charging zone may depend i.a. on the dimensions of the conductive loops of the charging device in relation to the conductive coils of the receiving electronic device.

Examples of various aspects of the charging process of electronic devices in accordance with various embodiments disclosed herein will now be described with reference to the charging device of FIG. 3 and with reference to electronic devices as described in connection with FIGs. 1 and 2. However, it will be appreciated that other embodiments may use different types of charging devices, e.g. charging devices providing a different geometry of charging zones, charging devices without communication capability, charging devices with a different (or even without any) user interface, etc. Similarly, it will be appreciated that other embodiments may use different types of electronic devices, e.g. electronic devices with only a single conductive loop or otherwise with a different number or form of conductive loops, electronic devices having a different form-factor, a different number or type of function devices, a different number or type of sensors, different or no communication capabilities, etc.

FIG. 4 illustrates the charging device 20 of FIG. 3 with a toy construction model 1 placed on top of the charging surface 24 of the charging device. The toy construction model 1 is constructed from a plurality of modular toy elements, including two interactive modular toy elements 10 of the type described in connection with FIG. 2. The toy construction model is placed on top of the charging surface 24 such that the interactive modular toy elements 10 are both within the charging zone of the charging device 20, even though they are positioned displaced from, in particular at a height above, the charging surface 24. Accordingly, the interactive modular toy elements 10 can be charged by the charging device 20 while they are incorporated as part of the toy construction model 1 and without the need for disassembling them from the toy construction model 1.

Generally, embodiments of the charging device allow multiple electronic devices to be charged at the same time without the electronic devices having to be placed at specific positions. Instead, they can be freely positioned and oriented within the charging zone. The charging device is operable to charge an electronic device also in proximity but displaced from the charging surface 24, i.e. without having to touch it. The charging of an electronic device inside the charging zone gradually changes in dependence of the position and/or orientation of the electronic device relative to the charging device, i.e. the charging performance is not binary - charging/not charging - but the charging efficiency varies gradually depending on the position and/or orientation of the electronic device in the charging field.

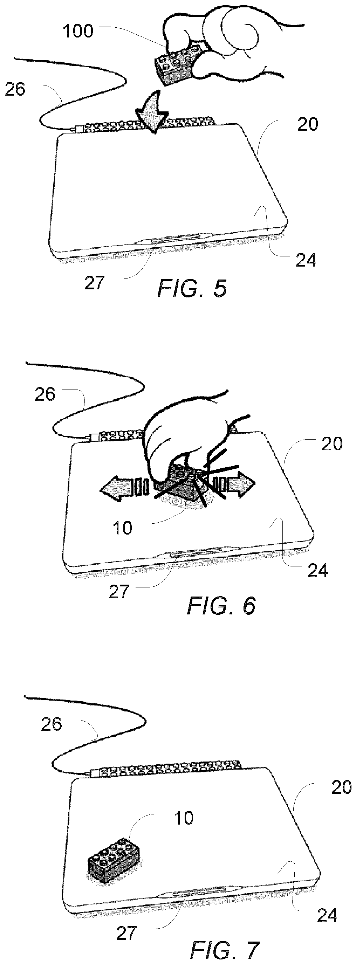

In the following, operation of the charging device for charging one or more electronic devices will be described with reference to FIGs. 5-9 and with reference to modular toy elements.

FIG. 5 illustrates the charging device 20 of FIG. 3 with an electronic device 10 in the form of an interactive modular toy element being moved by the user into the charging zone of the charging device 20 for charging. When being moved into the charging zone, the electronic device 10 may detect the presence of the charging field and, responsive to the detected charging field automatically enter an operational charging state, e.g. by changing its operational state from an operational play state to an operational charging state. The electronic device 10 may detect the presence of the charging field in a variety of ways as described herein, e.g. by detecting a charging field of at least a predetermined minimum strength or otherwise. The electronic device 10 may indicate to the user that it has entered its operational charging state, e.g. by an audible and/or visual indication, e.g. by one or more of the LEDs of the electronic device, by the loudspeaker and/or by providing another user-perceptible indication. In some embodiments, the electronic device 10 may even provide a user-perceptible indication of the current energy storage level of the rechargeable power source of the electronic device so as to provide an indication to the use as to how long a complete charging may last. The indication of the current energy storage level may be visual and/or audible, e.g. by providing a light or sound output with an attribute (pitch, color, intensity, blinking rate, etc) indicative of the current energy storage level.

In some embodiments, while in its operational charging state, the electronic device may omit or at least change the functions otherwise performed by the electronic device when operating in its normal operational state, e.g. when in an interactive play state. In particular, when operating in its operational charging state, the electronic device may limit the user-perceptible outputs to indications related to the charging process.

FIG. 6 illustrates the charging device 20 of FIG. 3 with an electronic device 10 in the form of an interactive modular toy element being moved around by the user within the charging zone of the charging device 20, e.g. immediately after the user has just placed the electronic device on the charging device or at a later time, e.g. after the electronic device has already been positioned on the charging device for some time for charging and is now being repositioned by the user.

When the electronic device 10 is in its operational charging state, i.e. has detected that it is inside the charging zone of the charging device 20, and when the electronic device further detects movement of the electronic device, the electronic device outputs a user-perceptible output indicative of the available charging rate at the current position and/or orientation of the electronic device within the charging zone. To this end, the charging circuit of the electronic device may monitor the power currently received or receivable by the electronic device, or another indicator of the available charging rate. The electronic device may further monitor whether it is being moved, e.g. by means of an accelerometer or other motion sensor of the electronic device. As long as the electronic device detects that it is being moved within the charging zone, it may emit a user-perceptible output indicative of the available charging rate. In the example of FIG. 6, the user-perceptible output includes light emitted by the LEDs of the electronic device at an intensity that is indicative of the currently available charging rate. Hence, the user may perceive the brightness of the emitted light as a visual indicator of the expected charging rate at the current position and/or orientation. It will be appreciated that, in other embodiments, the electronic device may provide alternative or additional user-perceptible outputs, e.g. by emitting light whose color represents the available charging rate, by emitting blinking light whose blink frequency represents the charging rate, by emitting a sound whose volume, pitch or other property represents the charging rate, or otherwise.

While the electronic device 10 detects that it is being moved about the charging zone, the electronic device may or may not perform actual charging. In some embodiments, during the detected movement, the electronic device may prioritize the monitoring of the available charging rate over the actual charging so as to provide an immediate feedback to the user. Actual charging may then commence, once the electronic device is stationary.

If the user again removes the electronic device 10 from the charging zone, e.g. without actually setting it down on the charging surface 24, the electronic device may detect the absence of the charging field, e.g. while still detecting motion, and exit its operational charging state (e.g. re-enter an operational play state). Accordingly, the electronic device may stop emitting the user-perceptible output that is indicative of the available charging rate, optionally before providing, or after having provided, a user-perceptible indication that the electronic device has exited its operational charging state and/or optionally after a predetermined delay period. Optionally, the electronic device may provide a user-perceptible indication of the remaining energy storage level in the rechargeable power source.

When, on the other hand, the user has found a suitable position and/or orientation of the electronic device 10 within the charging zone, the user may leave the electronic device at said position and/or orientation. When the electronic device no longer detects motion of the electronic device, the electronic device may, optionally after a predetermined delay period, stop emitting the user-perceptible output that is indicative of the available charging rate, e.g. as illustrated in FIG. 7. In some embodiments, the electronic device may emit, responsive to no longer detecting that it is being moved around but remaining stationary within the charging zone, an indication of the current energu storage level or other indication of an expected duration of the charging process.

FIG. 7 illustrates the charging device 20 of FIG. 3 with an electronic device 10 in the form of an interactive modular toy element, where the electronic device is positioned stationary inside the charging zone of the charging device 20, e.g. is resting on top of the charging surface 24. When the electronic device is positioned stationary within the charging zone, the electronic device may receive contactless power from the charging field and charge its rechargeable power source at the rate available at the current position and/or orientation of the electronic device within the charging zone. While the electronic device is charging and stationary within the charging zone, the electronic device may, in some embodiments, omit monitoring the received power (or field strength of the charging field or other indicator of the available charging rate), or it may monitor the received power at a lower rate. In some embodiments, the electronic device may output no user-perceptible output indicative of the available charging rate while charging and being stationary within the charging zone. In some embodiments, the electronic device may output no user-perceptible output at all while charging and being stationary within the charging zone. In other embodiments, the electronic device and/or the charger device may provide a user-perceptible output indicative of the charging being in progress. Once charging has been completed, the electronic device may provide a user-perceptible output indicative of the charging being completed.

If the electronic device again detects motion, e.g. because the user choses to reposition the electronic device within the charging zone, the electronic device may again provide the user-perceptible output indicative of the available charging rate, e.g. as described in connection with FIG. 6.

If the user removes the electronic device from the charging zone, e.g. after or before charging has been completed, the electronic device may detect the absence of the charging field, e.g. while detecting motion, and responsive to such detection exit its operational charging state (e.g. re-enter an operational play state). Accordingly, the electronic device may provide a user-perceptible indication that the electronic device has exited its operational charging state and/or optionally after a predetermined delay period. Optionally, the electronic device may provide a user-perceptible indication of the remaining energy storage level in the rechargeable power source.

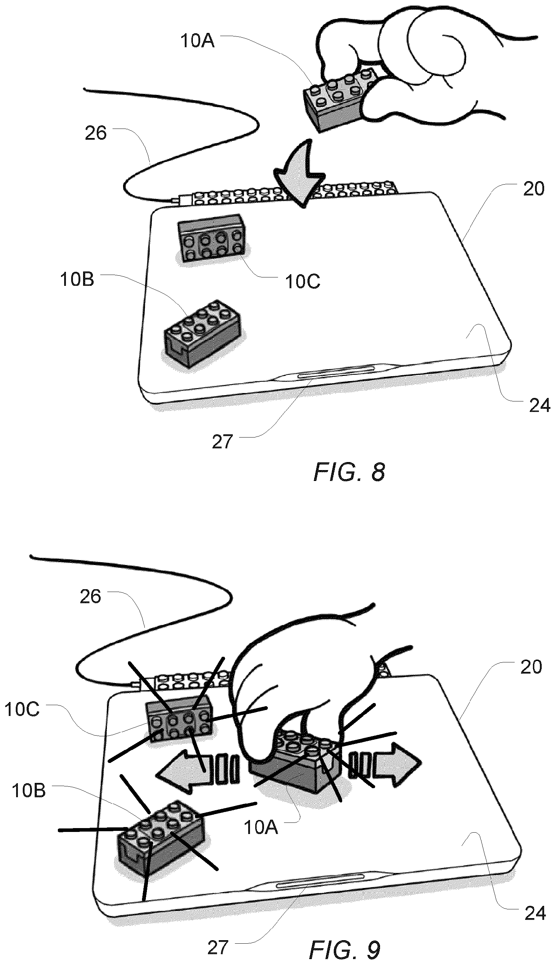

The charging device may provide a charging zone shaped and sized so as to allow multiple electronic devices to be charged concurrently by the charging device, in particular such that multiple electronic devices may, independently from each other, be freely positioned at arbitrary respective positions and/or orientations within the charging zone. Accordingly, when an electronic device is moved into the charging zone, one or more other electronic devices may already be present inside the charging zone, e.g. as illustrated in FIG. 8.

FIG. 8 illustrates the charging device 20 of FIG. 3 with an electronic device 10A in the form of an interactive modular toy element that is being moved by the user into the charging zone of the charging device 20 for charging, while two other electronic devices (also in the form of modular toy elements) 10B and 10C, respectively, are already present within the charging zone. In particular, electronic devices 10B and 10C may each have previously been positioned on the charging surface 24 of the charging device 20, e.g. as described in connection with FIGs 5 and 6 above. They are now stationary positioned on the charging surface 24 and are currently charging, e.g. as described in connection with FIG. 7. As illustrated in FIG. 8, the stationary electronic devices 10B and 10C may be positioned within the charging zone at respective positions and/or orientations.

When the additional electronic device 10A is being moved into the charging zone of charging device 20, the electronic device 10A may detect the presence of the charging field and, responsive to the detected charging field automatically enter its operational charging state, e.g. as described above with reference to FIG. 5.

As illustrated in FIG. 9, the user may then move the additional electronic device 10A around within the charging zone of charging device 20, and the additional electronic device 10A may provide a user-perceptible output indicative of its available charging rate, e.g. as described above with reference to FIG. 6.

Further, the available charging rate for the stationary electronic devices 10B and 10C may also be affected by the presence of the additional electronic device 10A. The manner of and degree to which the charging rate of electronic devices 10B and 10C is affected may depend on the relative position and/or orientation of the additional electronic device.

Accordingly, in order to allow the user to find a suitable position of the additional electronic device 10A, not only electronic device 10A provides a user-perceptible output indicative of its available charging rate, but also each of electronic devices 10B and 10C provide user-perceptible outputs indicative of their respective available charging rate.

To this end, each of electronic devices 10B and 10C may receive an interaction stimulus indicative of the additional electronic devices 10A being moved around within the charging zone of the charging device 20. The electronic devices 10B and 10C may receive this interaction stimulus in a number of ways: For example, the electronic devices 10A, 10B and 10C may wirelessly communicate with each other, e.g. via Bluetooth or using another suitable wireless communications technology. When the additional electronic device 10A detects that it is within the charging zone of charging device 20, and is being moved around within the charging zone, e.g. as described in connection with FIG. 6, the additional electronic device may communicate this to the other electronic devices 10B and 10C, e.g. by sending a suitable broadcast message or otherwise. Alternatively, the additional electronic device may communicate with the charging device 20, and the charging device 20 may inform the electronic devices 10B and 10C about the presence and movement of the additional electronic device 10A. In some embodiments, the charging device 20 may be configured to detect the presence and movements of the various electronic devices within its charging zone and communicate corresponding information to the electronic devices within its charging zone. Yet alternatively, the electronic devices 10B and 10C may detect the presence and changing position and/or orientation of electronic device 10A, e.g. by using a magnetic pose detection and tracking system. Yet further, optionally, the charging device 20 may communicate an identity or signature of the charging field within its charging zone, e.g. by a characteristic modulation of the charging field or otherwise, thereby allowing the electronic devices to determine which charging device they are in proximity of. Electronic device 10A may communicate this information to the other electronic devices 10B and 10C, thereby allowing them to more reliably ascertain that they are in the same charging zone as the additional electronic device 10A.

In any event, when the electronic devices 10B and 10C detect the presence and movement of the additional electronic device 10A within the charging zone of charging device 20, they may each monitor their received power or other indicator of the respective charging rate available to them. They may further activate their LEDs or other function devices to output a user-perceptible output indicative of their respective available charging rates.

The user may thus move the additional electronic device 10A around while monitoring the resulting effect on the available charging rates of all electronic devices 10A, 10B and 10C within the charging zone. It will be appreciated that a similar process may be performed, when one of the electronic devices 10B and 10C detects that it is being moved. Accordingly, whenever the user changes the spatial configuration of electronic devices within the charging zone, all electronic devices with the charging zone may respond with an indication of their respective available charging rates. Electronic devices 10A, 10B and 10C may continue to output the user-perceptible outputs indicative of their respective available charging rates until none of the electronic devices 10A, 10B, and 10C within the charging zone detect that they are moved around.

While the example of FIGs. 8 and 9 illustrates a scenario with three electronic devices within the charging zone of charging device 20, it will be appreciated that a corresponding process may be performed, when a different number of electronic devices are present in the charging zone, e.g. 2, 4, 5 or even more electronic devices.

## Claims

1. An electronic device comprising:
- a function device for performing at least one user-perceptible, controllable function;
- a rechargeable power source; and
- a charging circuit for contactless receipt of electrical energy and for charging the rechargeable power source when the electronic device is positioned in a charging zone of a contactless charging device;
wherein the electronic device is adapted to determine a parameter indicative of an available charging rate at a current position and/or orientation of the electronic device relative to the charging device; and to generate a user-perceptible output indicative of the available charging rate.

2. The electronic device according to claim 1, wherein the electronic device is further adapted to determine an interaction stimulus, and responsive to the determined interaction stimulus, to generate the user-perceptible output indicative of the determined parameter indicative of the available charging rate.

3. The electronic device according to claim 2, wherein the interaction stimulus comprises a stimulus selected from: a) a detected motion of the electronic device, in particular a detected motion within the charging zone, and b) a motion of another electronic device within the charging zone.

4. The electronic device according to any one of the preceding claims, wherein the charging circuit is configured to determine the parameter indicative of the available charging rate.

5. The electronic device according to any one of the preceding claims, wherein the user-perceptible output indicative of the available charging rate is one or more of a light emission and a sound emission.

6. The electronic device according to claim 5, wherein the light emission is varied according to the charging rate in respect of one or more of an emission intensity, a color, a time-varying sequence of light emission, and a frequency of a repetitive light emission pattern.

7. The electronic device according to claim 5 or 6, wherein the sound emission is varied according to the available charging rate in respect of one or more of a volume, a pitch, a time-varying sequence of sound emission, and a frequency of a repetitive sound emission pattern.

8. The electronic device according to any one of the preceding claims, wherein the electronic device further comprises one or more sensor devices for determining at least one interaction stimulus, in particular a motion of the electronic device.

9. The electronic device according to claim 8, wherein the one or more sensor devices are accommodated in or on a housing of the electronic device.

10. Electronic device according to any one of the preceding claims, wherein the electronic device is adapted for use in a toy construction system comprising a plurality of modular toy elements, wherein a housing of the electronic device comprises coupling members adapted for releasably coupling the electronic device with modular toy elements of the toy construction system.

11. A system comprising:
- a charging device defining one or more charging zones; and
- one or more electronic devices according to any one of the preceding claims.

12. The system according to claim 11, comprising at least two electronic devices.

13. The system according to claim 12, wherein each of the electronic devices are configured, when positioned within the charging zone of the charging device, to detect a change in the spatial configuration of electronic devices within the charging zone and, responsive to said detected change, to determine a parameter indicative of an available charging rate at a current position and/or orientation of said electronic device relative to the charging device and to generate a user-perceptible output indicative of the available charging rate.
